# EUROPEAN PATENT SPECIFICATION

(11) **EP 1 277 361 B1**
(45) Date of publication and mention of the grant of the patent: **25.07.2007**
(21) Application number: 01921412.1
(22) Date of filing: 29.03.2001
(51) Int. Cl.: H04Q 7/22, H04Q 7/38

(54) **ARCHITECTURE AND PACKET ROUTING IN A MULTI-BEARER-TYPE NETWORK**
ARCHITEKTUR UND PAKETWEGLENKUNG IN EINEM NETZWERK DES MEHRTRÄGERTYPS
ARCHITECTURE ET ACHEMINEMENT DE PAQUETS DANS UN RESEAU DE TYPE MULTISUPPORT

(30) Priority: 31.03.2000 FI 20000752
(43) Date of publication of application: 22.01.2003
(73) Proprietor: Nokia Siemens Networks Oy, 02610 Espoo (FI)
(72) Inventor: XU, Lin, FIN-33880 Lempäälä (FI); PAILA, Toni, FIN-10160 Degerby (FI)
(74) Representative: Virkkala, Jukka Antero
(86) International application number: PCT/FI2001/000306
(87) International publication number: WO 2001/076286

(56) References cited:
- EP-A1- 1 047 244
- WO-A1-99/31846
- WO-A1-99/31853
- WO-A2-00/45560
- CHIRUVOLU G. ET AL.: 'Mobility and QoS support for IPv6-based real-time wireless internet traffic' IEEE INTERNATIONAL CONFERENCE ON COMMUNICATIONS (CAT. NO. 99CH36311) vol. 1, 06 June 1999 - 10 June 1999, VANCOUVER, BC, CANADA, pages 334 - 338, XP000897186

## Description

### Background of the invention

The invention relates to traffic management in a multi-bearer packet data network. A multi-bearer network, or an MBN, is a network having the capability to carry a data packet via one of several alternative bearers. To be more precise, the term "multi-bearer network" should be interpreted as meaning "multi-bearer-type network", or in other words, a network arrangement which provides multiple different bearer types for data packet delivery. An example of an MBN is a concept known as MEMO (Multimedia Environment for Mobiles), see reference 1- Additionally, the MBN supports mobility of a subscriber terminal. An example of terminal mobility is IP (Internet Protocol) mobility, which is the topic of standard RFC2002 and an internet Draft *"*Mobility Support in IPv6", by C. Perkins and D. Johnson, dated 28 October 1999 by the Internet Engineering Task Force (IETF). The network layer protocol to be used in the invention, IPv6, is described in documents RFC-2460: *"Internet Protocol, Version 6 (IPv6) Specification"* and RFC-2373: *"IP Version 6 Addressing Architecture".* The status of these Internet drafts is "work in progress".

A generic problem underlying the invention is that the MEMO concept is very limited. It only contemplates one uplink bearer type, namely GSM (Global System for Mobile Communication), and one downlink bearer type, namely DAB (Digital Audio Broadcast). Within the context of this application, 'uplink' means from the mobile node MN to the correspondent node CN and 'downlink' means the inverse direction.

WO-A-99 31846 discloses a method for routing data to a mobile node, the method comprising maintaining reachability information on a mobile node, and setting a destination to which received data is to be sent if the mobile node is unreachable.

WO-A-99 31853 discloses a method for routing data to a mobile node, the method comprising determining locations of agent nodes, and transmitting successive data units from a stream of data units intended for the mobile node to different ones of the agent nodes. IP. It is advantageous to keep the volume of signalling messages as low as possible, and according to D3, this is achieved through a proxy known as care-taker (CT) keeping the mobile node informed of changes in the path messages of the on-going sessions.

WO-A-00 45560 : (prior art falling under Art. 54(3) EPC) describes a public mobile access data network in which a home agent/foreign agent model is used where the home and foreign agents transfer data packets over the network via a tunnel. The home network addresses serve as IP addresses that are dynamically re-allocated to label-switched paths as the mobile node moves from one foreign agent to another.

EP-A-1 047 244 : (prior art falling under Art. 54(3) EPC) discloses a method for configuring a QoS session between a mobile node and a correspondent node. In the method, a source address of IP packets from the mobile node is modified to identify the mobile node's address in a foreign network. The source address of the IP packets may be modified in the foreign network. The source address may be further modified in the correspondent network to the mobile node's home address.

Expanding the MEMO concept to multiple alternative uplink and/or downlink bearer types causes more specific problems. One of the specific problems is how to select an optimal bearer for each data packet in varying situations in an MBN. Data packets have different quality-of-service requirements. Situations may vary because the subscriber moves or the network load changes. Another specific problem is how to route the traffic to the mobile node via the selected bearer and to design suitable network elements and MBN architecture.

### Disclosure of the invention

The object of the invention is to provide methods and equipment for solving the specific problem related to bearer selection in an MBN.

This object is achieved with a method and equipment which are characterized by what is disclosed in the attached independent claims. Preferred embodiments of the invention are disclosed in the attached dependent claims.

According to the invention, resource availability information concerning a downlink bearer network and subscriber preference information concerning a mobile node are received and maintained in a service support node set. The service support node set also maintains traffic policy information concerning a multi-bearer network. In a centralized traffic policy controller, a routing table is generated on the basis of the subscriber preference information, the traffic policy information and the resource availability data, and the routing table is used for routing one or a few initial data packets of a new session from the correspondent node to the mobile node. A binding update is performed between the mobile node and the correspondent node, and an address associated with the centralized traffic policy controller is stored as the mobile node's care-of address in its home agent. An initial data packet is routed via the home agent and the centralized traffic policy controller to a bearer network interface unit serving the mobile node. In response to the routing, an address of the bearer network interface unit is stored as the mobile node's care-of address in the correspondent node. In response to the binding update, subsequent data packets are routed directly from the correspondent node to the bearer network interface unit such that the subsequent data packets bypass the home agent and the centralized traffic policy controller.

The invention is based on a novel distribution of functions within an MBN. The functions are distributed over four major nodes or node sets. In addition, the MBN comprises a physical or virtual backbone network. A first node set, called access control nodes, grants or rejects user rights within the MBN. This set also stores subscriber preference information.

A second node set, called home administration nodes, comprises a home registration unit (HRU) for storing subscriber registration and preference information, such as access right information. For instance, a subscriber may be a national subscriber and not pay for any roaming support. Another user may elect roaming support in major European cities. The available options depend entirely on the service providers. The HAN node set also comprises an MBN home agent (MHA), which is a special version of a home agent. It supports a mobile node that uses an MBN-specified IP address as its home addresses. Each MN subscriber which is registered for MBN service has an entry in the HRU of the home network. An MBN serves its subscribers regardless of which IP address is used as the mobile node's home address for communicating with the correspondent node.

A key concept in the mobile-IP protocol is the home agent (HA). For each mobile node, there is one home agent. The home agent is a routing entity in a mobile node's home network which tunnels packets for delivery to the mobile node when it is away from its home network, and maintains current location information for the mobile node. The home agent per se is known to the skilled reader. But the invention is also partially based on the idea that the home agent function is supplemented with a home register unit (HRU) which is a separate entity from the home agent. Separating the home register unit from the home agent allows more freedom in positioning the home agent. In other words, the home agent can be located virtually in any network, and the mobile node can use its own IP address instead of the one provided by the MBN. Thus a mobile node is allowed to use either an IP address provided by the MBN or an IP address provided by some other network. If the mobile node uses an MBN-provided IP address as its home address for communicating with its correspondent node, the MHA acts as the mobile node's home agent. If the MN uses an IP address provided by eg a corporate network, the home agent in that network is the mobile node's home agent.

A third node set, called service support nodes (SSN), is in charge of centralized traffic policy control, mobility management and resource reservation decisions. The SSN node set also controls starts of sessions and routes the first packet(s) of new sessions. Normally the SSN node set does not route subsequent packets of ongoing sessions. Instead, the mobile node updates its mobility binding with its correspondent node, after which the traffic bypasses the SSN nodes. For some reason, a mobile node may not want to send a mobility binding update message. In this case, the SSN nodes route all traffic to the mobile node.

The service support nodes (SSN) comprise a traffic policy controller (TPC) within the backbone network. Later in this application, the traffic policy controller is frequently shortened to "traffic controller". The traffic (policy) controller makes centralized routing policy decisions but does not route all packets itself. It only routes the first packet or the first few packets of a new session and helps other network elements to communicate directly with each other. The SSN nodes also comprise a resource coordination unit (RCU) from which the TPC checks resource availability before making decisions about traffic allocation. The traffic controller also requests the resource coordination unit to reserve resources for a flow when necessary (for guaranteed service). Moreover, the traffic controller selects a downlink bearer on the basis of traffic flow or/and traffic class. The SSN node set also comprises a mobility management unit (MMU) which supports the mobile node in handovers within a TPC area and between two TPC areas.

The TPC, RCU and MMU are preferably closely coupled or within the same network element. This means that the mobile node is not burdened with addressing these functions separately. Instead, these functions share a common IP address, and the MN communicates with the TPC which distributes MN-originated information with the RCU and the MMU.

Each traffic policy controller (TPC) has an area of responsibility. Such an area will be called a TPC area. The TPC area comprises the cells broadcasting the TPC's IP address or other unique TPC identifier. Because the cell size varies and the cells are partially overlapping, the TPC area has no clearly-defined geographical border, and a mobile node may be located geographically in two or more neighbouring TPC areas simultaneously. However, the mobile node can be registered with (ie reachable via) one TPC at any time. In such a situation, the mobile node selects the TPC controlling the cell with the best signal quality. Moreover, the area of a certain TPC is likely to be different between the various bearer networks. In other words, the TPC area for DVB is different from the TPC area for DAB.

A fourth node set, called interface units (IU), acts as interfaces to the various bearer networks. The primary function of the interface units is to encapsulate IP packets into protocols suitable for the bearer network in question, and to control incoming traffic to a bearer network or a broadcast cell. The interface unit of a broadcast cell also monitors and controls the resource usage and reports resource availability to the SSN nodes.

Each interface unit (IU) toward the broadcast bearer networks comprises or is closely coupled to a resource management unit (RMU). The RMU controls the physical resource allocation in each cell under it. It also acts as a peer entity of the resource coordination unit to respond to resource allocation requests. More specifically, the RCU makes decisions concerning resource allocation but the RMU maps each data flow to one or more physical or logical channels of the specific broadcast station.

The bearers include a first set of bidirectional bearers. Examples of bidirectional bearers are circuit-switched mobile networks, such as GSM (Global System for Mobile communications), and packet-switched mobile networks, such as GPRS (General Packet Radio Service), and third generation mobile networks, such as UMTS (Universal Mobile Telecommunications System), which offer both circuit-switched and packet-switched bearers. The bearers also include a second set of unidirectional bearers. Examples of unidirectional bearers are digital audio broadcast (DAB) and digital video broadcast (DVB). The set of unidirectional bearers can also be called broadcast bearers, and the set of bidirectional bearers can also be called non-broadcast bearers.

A multi-bearer network according to the invention comprises a backbone network which is preferably based on IPv6 (Internet Protocol version 6) with mobility support. The backbone network has border gateway nodes towards the Internet and interface units (IU) towards the various bearer networks.

The invention provides mobility support in an MBN in an elegant manner. There is a first set of centralized access control nodes, a second set of centralized traffic (policy) control nodes and a third set of interface nodes for each bearer network. The mobile node and its correspondent node are not burdened with addressing each node or functionality separately. To access services within the MBN, the mobile node is only required to have some rights in one bidirectional (uplink) bearer network.

### Brief description of the drawings

The invention will be described in more detail by means of preferred embodiments with reference to the appended drawing wherein:
Figure 1 is a block diagram illustrating an overall network architecture;
Figure 2 illustrates addressing within the MBN;
Figure 3 shows a traffic handling policy table THPT;
Figure 4 shows a mapping table QMTC for mapping QoS (Quality of Service) in a packet's IP header into a traffic class within the MBN;
Figure 5 shows a list ACAL of the mobile node's available care-of address;
Figure 6 is a signalling diagram illustrating registration and resource reservation;
Figure 7 is a signalling diagram illustrating the start of a session;
Figure 8 illustrates a microcell architecture for DxB networks; and
Figure 9 illustrates the various data structures used in the system shown in Figure 8.

### Detailed description of the invention

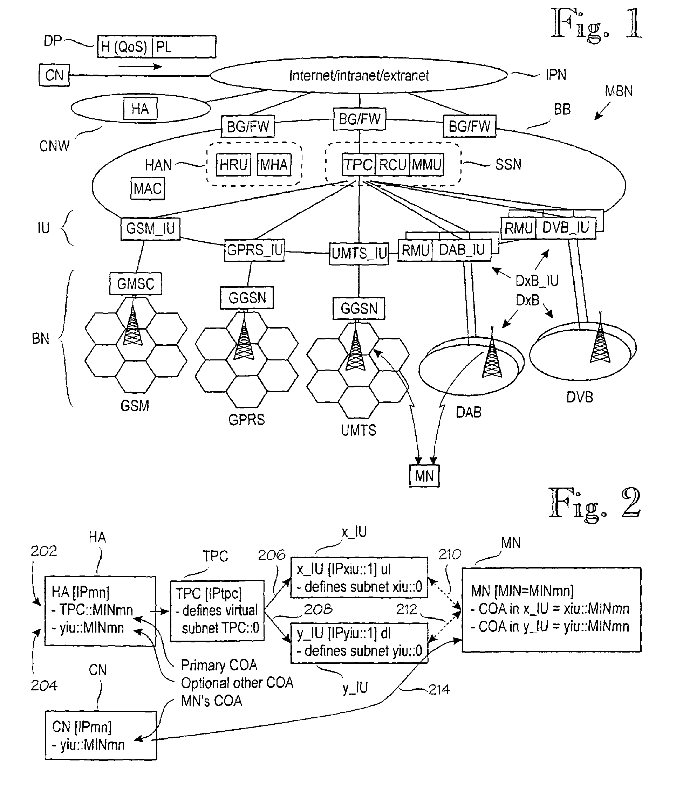

Figure 1 is a block diagram illustrating an overall network architecture. Reference sign MN denotes the mobile node. Reference sign CN denotes the mobile node's correspondent node, which is a host or server the mobile node is communicating with. The mobile node MN communicates with its correspondent node CN via a multi-bearer network MBN which offers several alternative bearers for a data packet DP. The MBN comprises a physical or virtual backbone network (BB). The mobile node MN is able to communicate with several bearer networks BN. The bearer networks comprise at least one bidirectional bearer network (in this example: GSM, GPRS or UMTS) and at least one unidirectional or broadcast bearer network (in this example: DAB and DVB). The DAB and DVB are commonly referred to as DxB. The DxB networks are the principal bearers for downlink traffic. The mobile node uses the bidirectional (uplink) bearers primarily for accessing the services of the MBN, although some bidirectional bearers, most notably the UMTS, can be used for downlink traffic with a moderately high speed. For clarity, the bearer networks are shown as distinct in Figure 1, but in reality they are geographically overlapping, and a mobile node may have access to all bearer networks at the same time. The bearer networks BN per se are known to the skilled reader, and especially the bidirectional bearer networks can be largely treated as black boxes.

Each data packet DP comprises a header H and a payload part PL. To be precise, a data packet typically has several headers inside each other, because each protocol layer inserts its own header. However, each protocol layer only handles its own header, and a model with only one network layer header is usually sufficient for describing the invention. The header indicates, directly or indirectly, a quality-of-service requirement QoS for the data packet. An example of a direct QoS indication is a case where a data packet header includes a parameter which is or which can be directly mapped to a quality-of-service requirement parameter. An example of an indirect QoS indication is a case where a (Transmission Control Protocol) data packet header indicates a port number which in turn indicates the QoS requirement. It should be understood that 'quality of service' is a very generic term indicating certain requested or negotiated transmission characteristics, such as bit rate, maximum delay and/or packet loss probability. Depending on the actual protocol used, quality of service is indicated by or mapped to one (or more) of the existing appropriate fields, such as the Traffic Class field of IPv6. The term 'traffic class' is used to refer collectively to the fields which are used to indicate the quality-of-service requirement.

In the arrangement shown in Figure 1, the MBN communicates with the CN via an IP Network IPN, such as the Internet or an intranet/extranet. A border gateway node BG interfaces the MBN to the IP network IPN. The border gateway BG is typically a simple (but sufficiently powerful) router which preferably includes a firewall function FW. A backbone network BB combines the different bearer networks BN. The backbone network may be the MBN operator's internal network. A physical example of a backbone network is a highspeed local-area network or a wide-area network. The backbone network BB is based on lPv6 (Internet Protocol version 6) or a later version, with mobility support.

In a system as shown in Figure 1, the access control node set is implemented as an MBN authentication centre MAC, which provides centralized grant or denial of the mobile node's rights to services via the backbone network BB. The MAC also stores subscriber preference information related to the mobile node.

A second node or node set, called HAN (home administration nodes), supplements the mobile IP home agent function. The HAN nodes comprise a home registration unit (HRU) for storing subscriber registration and preference information, such as access right information. The HAN nodes also comprise an MBN home agent (MHA), which is a special version of the home agent. Separating the home register unit from the home agent allows more freedom in positioning the home agent. The home agent can be located virtually in any network, and the mobile node can use its own IP address instead of the one provided by the MBN. Accordingly, in the example shown in Figure 1 the home agent HA of the mobile node MN is in the MN's corporate network CNW.

The home agent HA is a key concept in the mobile-IP protocol. For each mobile node, there is one home agent. The home agent is a routing entity in a mobile node's home network which tunnels packets for delivery to the mobile node when it is away from its home network, and maintains current location information for the mobile node. It tunnels datagrams for delivery to, and detunnels datagrams from, a mobile node when the mobile node is away from its home network.

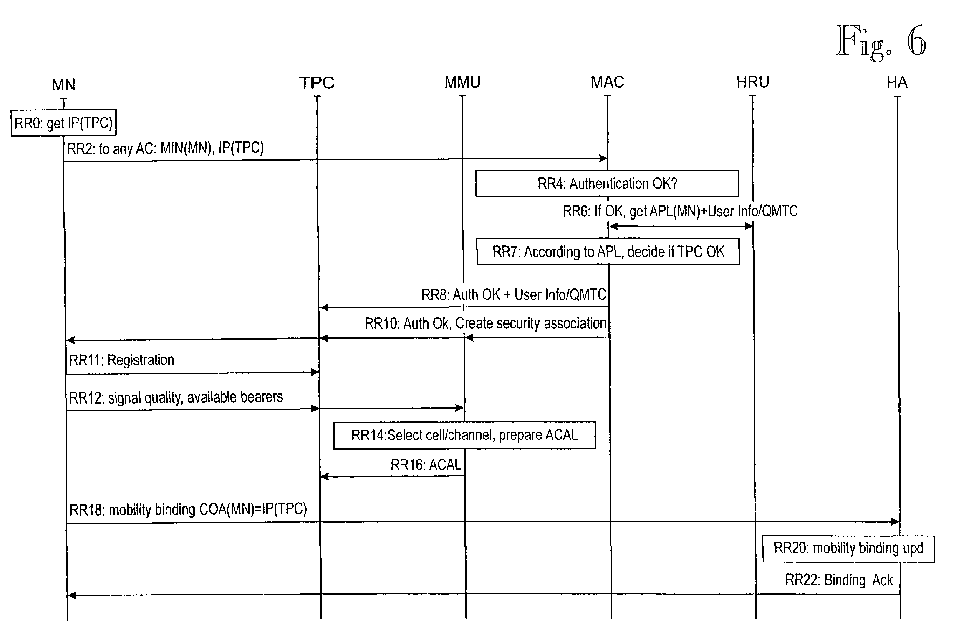

The home register unit HRU stores the user registration information, such as an Access Permission List (APL, see Figure 6) which indicates the MN's rights in each BN. The HRU also stores the subscriber's preference information, which indicates what quality of service the subscriber requires from various applications (or for specific incoming traffic classes). An example of such preference information is the QMTC table shown in Figure 4. The HRU of a visiting MN may be located in a different MBN. In such a case, the HRU of the visited MBN may consult the HRU of the MN's home MBN. If the traffic handling policy of the MN's home network differs from the policy of the visited network, the HRU should adapt the preference information accordingly, such that the user receives the expected quality of service.

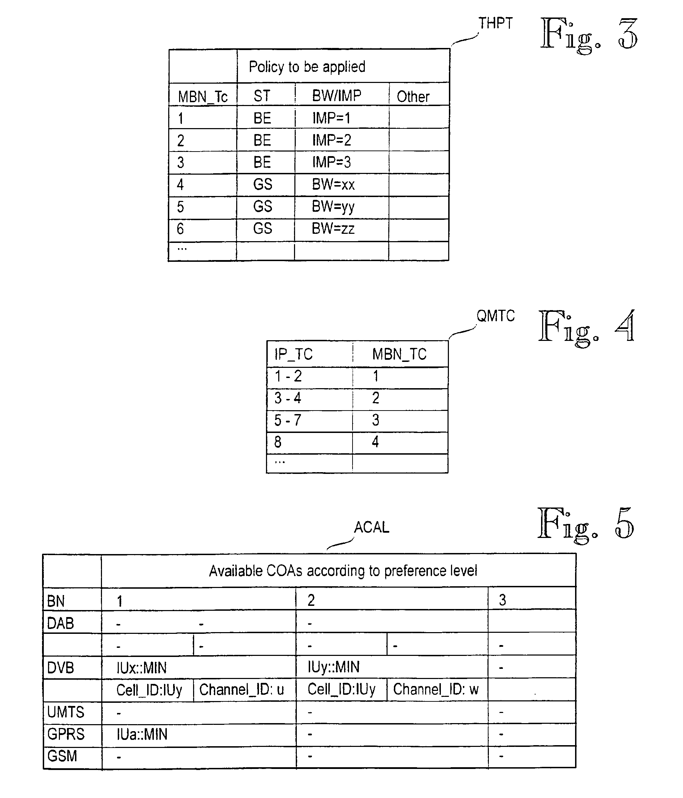

A third node set, called SSN (service support nodes), provides centralized administration and distribution of traffic policies (see Figures 3 and 4). The SSN node set combines the MN-specific subscriber preference information and operator-specific policy information into an MN-specific traffic handling policy which the SSN node set used to make decisions concerning cell and/or channel selection. The MN-specific traffic handling policy is also distributed to the interface nodes which route the packets of ongoing sessions. It may route the first data packet(s) of new sessions but does not route subsequent data packets of ongoing sessions if the MN sends its updated mobility binding information to the CN. The traffic control node set also supports centralized mobility management for managing the mobility of the mobile node within the downlink bearer networks DxB, and it makes centralized resource reservation decisions within the downlink bearer networks. In the arrangement shown in Figure 1, the SSN node set comprises a traffic (policy) controller TPC. Each traffic controller comprises or is closely coupled to a resource coordination unit RCU and a mobility management unit MMU.

A fourth node set, called interface units IU, acts as interfaces to the bearer networks BN. The IU nodes also carry out the resource reservation decisions in the downlink bearer networks DxB. In Figure 1, the interface units are labelled xx_IU, where 'xx' is the relevant bearer network. More precisely, the backbone network BB preferably has one (or more) interface unit towards each bearer network having inherent mobility support (GSM, GPRS and UMTS) and one interface unit towards each cell in a bearer network not having inherent mobility support (DxB). Each DxB interface unit comprises or is closely coupled to a resource management unit (RMU).

The mobile node MN must be able to communicate with several bearer networks BN. It implements IPv6 with mobility support. It monitors selected links (physical channels of DxB) for router advertisement messages. Thus it gains knowledge of the various routers within the MBN. The MN has a unique MIN number (MBN interface number) for automatic care-of address configuration. The MN is able to send an authentication message for registering with the backbone network BB via an interface unit IU of a bidirectional BN, the IU consequently forwarding the authentication request to the MBN authentication centre MAC. The mobile node is able to initiate a binding update procedure for registering its own location information with its home agent HA and the correspondent node CN.

The mobile node is also able to edit its mapping from IP Quality of Service (QoS) to MBN Traffic Class (MBN_TC, see Figure 4). An example of a QoS-to-MBN traffic class mapping is as follows. When users enter or update their subscriptions, they can select their QoS and MBN_TC mappings. The MBN operator can provide several mapping tables, each of which corresponds to a different price or tariff. The user selects one mapping table. Later on, the user may modify the mapping table (by calling the operator), access and modify its profile (eg via a web/wap browser or by using special software). Once the mapping is changed, the charging method will be changed accordingly. The traffic controller TPC uses such mappings as a basis for determining the specific xx_IU unit via which a given kind of traffic is conveyed.

Figure 2 illustrates a general addressing concept within the MBN. IPv6 employs two types of care-of addresses (COA): a primary COA and a co-located COA. Because of the addressing structure of IPv6, there is usually no need to have separate foreign agents for mobility support (in contrast to IPv4), and the COAs are co-located COAs. A mobile node may have multiple COAs, and a single home agent may store more than one COA for one mobile node. But at any one time, only one COA is registered as the primary COA to which the home agent tunnels MN-terminated data.

The home agent HA knows the care-of address associated with the traffic controller TPC. Preferably, the mobile node's primary COA is the subnetwork prefix of the TPC plus the MN's MIN. An advantage of this addressing scheme is that the TPC is able to see the MN's address and route the data to its final destination even if the HA encrypts MN-terminated tunnelled data.

According to a preferred feature of the invention, the primary COA registered in the home agent is associated with the traffic policy controller TPC. In other words, the COA's prefix is the TPC's subnetwork prefix and the last part is the mobile node's own MIN. The TPC acts as a router for the traffic heading toward the COA. The COA stored in the CN is associated with the relevant interface unit IU. This address allocation trick forces the traffic to be routed via the TPC during the start of a session, and allows traffic routing directly via the selected IU during the remainder of the session. The MN and the CN may open a second session in parallel to the first session. The data packets of the parallel session may be routed directly to the MN via the IU if no resource reservation is needed.

In the example shown in Figure 2, the home agent HA maintains the primary COA 202 of the mobile node MN. The primary COA 202 is the IP address 202 of the traffic controller TPC used by MN. Optionally, the HA may also store the IP address 204 of the MN within the subnetwork under the downlink interface unit currently used by the MN. In this example, there are two possible downlink interface units x_IU and y_IU, of which y_IU is selected. The traffic controller TPC maintains the IP address 208 of the downlink interface unit y_IU currently used by the MN and the IP address 206 of another downlink interface unit x_IU. The downlink interface units in turn maintain the mobile node's COA (210 and 212) in each respective subnetwork.

During the start of a session, the first packet is routed by using the addresses 202, 208 and 212. As soon as the correspondent node CN registers the MN's new mobility binding, subsequent packets are routed by using the mobile node's COA 214 within the subnetwork defined by the downlink interface unit y_IU.

Figure 3 shows an example of a traffic handling policy table THPT. For each MBN Traffic Class (MBN_TC), the THPT defines the traffic handling policy to be applied. The THPT can be similar or different between different MBN networks. Column ST indicates the service type of the traffic class. In this context, "service type" is a generic term and not a name of a field in an IPv4 packet header. The possible values are "best effort" (BE) and "guaranteed service" (GS). (In a radio network, however, "guaranteed" must be read as "guaranteed if possible"). BW means bandwidth (measured by some appropriate and sufficient metrics), and IMP means importance. Low-importance data packets are discarded first if sufficient bandwidth is not available. The column marked "other" can be used for example to implement policies with time dependant validity. This means that daytime priorities can be different from nighttime priorities.

Figure 4 shows an example of a mapping table QMTC for mapping QoS in a data packet's IP header into a traffic class within the MBN (QMTC = QoS to MBN_TPC). This table is subscriber-specific and maps IPv6 traffic classes IP_TPC into MBN traffic classes MBN_TPC. The traffic class in question is indicated by the packet's header.

Figure 5 shows an example of a list ACAL of the mobile node's available care-of address (ACAL = Available Care-of Address List). For each mobile node, there is a corresponding ACAL table which lists, in decreasing order of preference, alternative available care-of addresses in each available downlink bearer, cell or channel. In the example shown in Figure 5, there are two available care-of addresses for DVB (downlink) and one for GPRS (uplink). SPx is the subnetwork prefix of subnetwork x, and MIN is the MBN interface number for the mobile node. The mobile node continuously measures signal strength (or some other signal quality parameter, such as the bit error ratio) of each available broadcast channel. It sends the measurement results to the mobility management unit MMU, which maintains a list of channels having an acceptable signal quality. Then the MMU translates this list into a list of care-of addresses wherein each channel corresponds to a combination of the relevant subnetwork prefix and the mobile node's care-of address. Then the MMU arranges the ACAL list according to preference (signal quality) and sends the ACAL list to the traffic controller TPC. It is the traffic controller's responsibility to make the final decision concerning the care-of address to be used. Three example situations illustrate the decision-making process.

In a first situation, the mobile node is powered on but does not receive data from any CN. When the first packet arrives from a CN, the packet is tunnelled by the HA to the MN's COA associated with the TPC. The TPC, acting as a default router, receives the packet and makes the cell/channel decision on the basis of the ACAL list. After making the decision, it pages the MN, builds a routing path to the MN via the selected IU, and routes the packet via the IU to the MN. The TPC also informs the MMU about the decision so that the MMU can monitor the signal quality (strength) of the active cell and make appropriate handover decisions.

In a second situation, there is an ongoing session and the mobile node is moving from one place to another. This move requires the ACAL list to be changed. The MMU updates the ACAL list. If the MMU determines that a handover is necessary, it sends the TPC a request to select a new cell on the basis of the new ACAL. In this case too, the TPC informs the MMU about the decision, and the MMU assists the MN to complete the handover.

In a third situation, a resource changes. Accordingly, the MN may have to be handed over to another cell/channel. In this case, the TPC makes the decision on the basis of the ACAL and instructs the MMU to perform the rest of the handover.

Figure 6 is a signalling diagram illustrating registration and resource reservation. Each MBN has a traffic handling policy table THPT (see Figure 3). In step RR0, the MN wants to initiate a registration process. The MN is assumed to have some rights in one uplink network, which in this example is the GPRS network. The MN has no rights yet in the broadcast networks, but it monitors the broadcast links to obtain the identifier or IP address of the traffic controller TPC which controls the area in question. In step RR2, the MN sends the authentication centre MAC an authentication request comprising the MN's MIN (MBN interface number) and the IP address of the TPC (obtained in the previous step). In step RR4, the MN is authenticated by the authentication centre MAC. The authentication process is the topic of a co-pending patent application filed on the same day as the present application. For the purposes of the present invention, it will suffice to say that after the authentication process, the MAC knows whether the MN is allowed to access this MBN. If the authentication is completed successfully, in step RR6 the MAC consults the home registration unit HRU to get the MN's Access Permission List APL, which indicates the MN's rights in each BN. The HRU of a visiting MN may be located in a different MBN. The TPC also negotiates with the HRU to obtain the subscriber's preferences, such as the QMTC table shown in Figure 4. In step RR7, the MAC decides whether the TPC is appropriate, considering the APL list. In step RR8, the MAC informs the TPC that the authentication was successful, and reports the subscriber preference information. In step RR10, the MN receives an indication that the authentication was completed successfully. Also, the MAC establishes a security association between the MN and the SSN (the TPC, MMU and RCU). For example, a session key may be distributed to the MN and the SSN. The session key allows encrypted communication between the MN and the SSN. In a registration step RR11, the MN sends its address in the uplink and downlink bearer networks to the TPC. In step RR12, the MN reports the following information to the TPC, which passes it on to the MMU (which preferably shares the TPC's IP address): 1) signal quality of each available cell/channel in the broadcast network(s), and 2) available bidirectional bearers. In step RR14, the TPC/MMU selects the acceptable cell(s)/channel(s) in the broadcast network(s) and prepares the ACAL list (Available Care-of Address List, see Figure 5). In step RR16, the MMU gives the ACAL list to the TPC. In step RR20, the MN initiates a registration with its home agent HA by sending a mobility binding COA(MN) = COA(TPC-MN). In other words, the MN's COA within the HA is the COA associated with the TPC. In steps RR22 and RR24, the HA updates and acknowledges the MN's mobility binding. Any correspondent node CN may now reach the MN via its HA by sending a packet with the IP address of the MN.

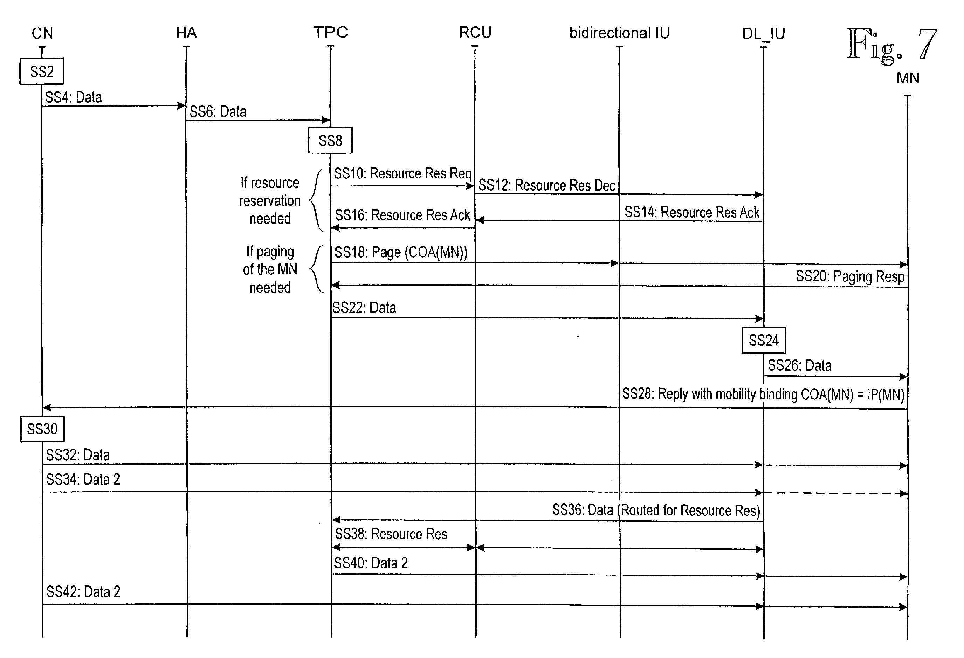

Figure 7 is a signalling diagram illustrating the start of a session. The set of events begins in step SS2 in which the MN's correspondent node CN knows the MN's IP address IP(MN). In step SS4, the CN does not know the mobility binding in the HA. Thus the first user data packet is routed to the HA. (In Figure 7, 'data' refers to data packets of session 1, and 'data 2' refers to data packets of session 2.) In step SS6, because the HA stores the TPC's IP address as the MN's primary COA, the packet is tunnelled to the TPC. In step SS8, the TPC uses the QMTC table to classify the incoming packet to its MBN traffic class. Next, the TPC uses the ACAL table (which combines the subscriber's preference, the MBN operator's traffic policies, and available traffic/resource information (resource availability data) obtained from the RCU) to select a downlink bearer.

Steps SS10 to SS16 relate to resource reservation, which the TPC performs only when necessary (for guaranteed service). Resource reservation is specific to the data flow. For example, if the data flow in question belongs to MBN traffic class 5, the TPC reserves a certain amount of bandwidth in the selected cell (under the COA indicated by the ACAL). In step SS10, the RCU preferably maintains a database (eg a fast look-up table) that indicates resource availability in all cells under the TPC, and in the neighbouring cells (for smooth handover). If the incoming traffic belongs to best effort service, the TPC selects the cell only on the basis of the resource availability table. If the incoming traffic belongs to guaranteed service, the TPC checks 1) if resource reservation has been performed, and 2) if not, how much bandwidth has to be reserved (based on the QMTC and THPT tables). By looking at the resource availability table, the TPC determines a suitable channel, but it requests the RCU to perform the actual channel reservation. In step SS12, the RCU makes a decision about resource reservation and sends the decision to the downlink interface unit DL_IU (in this example: a DVB interface unit). Steps SS14 and SS16 are the corresponding acknowledgements.

Steps SS18 and SS20 relate to paging the mobile node MN. If the MN is not active in the selected bearer or channel, it needs to be paged. In step SS18, the MN is paged via the uplink interface unit UL_IU (a GPRS interface unit in this example). Step SS20 is the paging response from the MN.

In step SS22, the first user data packet to the MN is forwarded to the downlink interface unit DL_IU. In step SS24, the DL_IU checks that the recipient's COA is authorized and the resource reservation is valid. In step SS26, the DL_IU forwards the first user data packet to the MN. In step SS28, the MN notices the incoming data packet from the CN and responds with a mobility binding of COA(MN) = COA(IU-MN). In other words, the COA is associated with the DL_IU. The subnetwork prefix is the same as with the DL_IU, and the second part of the address is the MIN. In step SS30, the CN updates the MN's mobility binding. In step SS32, the CN begins to send MN-terminated data packets directly to the DL_IU, thus bypassing the intervening elements (the HRU, the HA and the TPC). In reality, the CN may have sent more than one packet before receiving the MN's updated mobility binding in step SS28, in which case the TPC may have to route more than one packet to the MN.

In step SS34, if the same CN needs to open another session for the MN, and the new session requires best effort service (no resource reservation needed), the data of the new session is sent just like the data in step SS32 (the final step being shown by a dotted arrow). But if the new session requires guaranteed service (which in turn requires resource reservation), the first packet of the new session is routed from the DL_IU to the TPC, as shown in step SS36. In step SS38, the TPC performs resource reservation for the second session. This step comprises the detailed steps of SS10 to SS16. In step SS40, the first data packet of the second session is routed to the MN. In step SS42, subsequent packets of the second session are routed to the MN.

No explicit messages to end a session are needed. If there are no MN-terminated packets for a predefined time, the IU can simply delete the information related to the MN from its cache and inform the TPC about its action. The MN may maintain a similar timer. If it receives no packets before the timer expires, the MN stops monitoring the broadcast bearer for user data. If the MN is still expecting data when the timer is about to expire, the MN may request the IU to temporarily extend the time limit. The IU may accept or reject the request.

In order to save the battery of a portable mobile node, it is preferable that the mobile node only monitors one bearer type (network) at a time. For example, the subscriber data related to the mobile node can include a default bearer type, such as GSM or UMTS. The mobile node should be paged on this bearer. The mobile node can be ordered to monitor the selected bearer type by sending a modified page message which indicates the selected bearer type, channel, possible decryption data, etc. Alternatively, such information can be sent in a separate message, such as a data call or the like.

### DxB microcell architecture

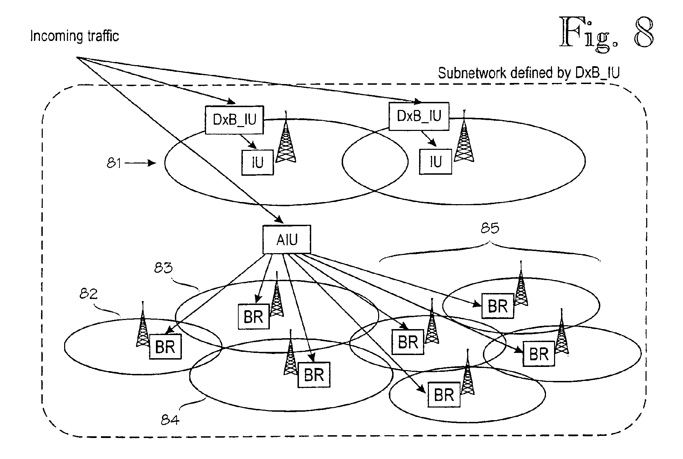

Figure 8 illustrates a cellular broadcast network. The cellular broadcast network concept has been introduced for data broadcasting in DxB networks. The concept introduces DxB microcells. In some areas, such as department stores, supermarkets and the like, a DxB network may comprise two overlapping cell structures. Such areas are covered by normal DxB cells 81, called macrocells, and by smaller cells 82 to 85, called microcells. The microcells provide content which is customized according to a particular site. To optimize network architecture for such a microcell site, a preferred embodiment of the invention introduces two new elements, namely an aggregate interface unit AIU and a broadcast router BR. Each broadcast router BR is coupled to a single microcell transmitter. It encapsulates IP data into protocols suitable for a DxB bearer. Several broadcast routers are connected to the MBN backbone via a single aggregate interface unit AIU. The AIU acts not only as a router for the BRs, but also as a centralized resource management unit. Employing the AIU and BR elements reduces key management load and signalling related to resource management.

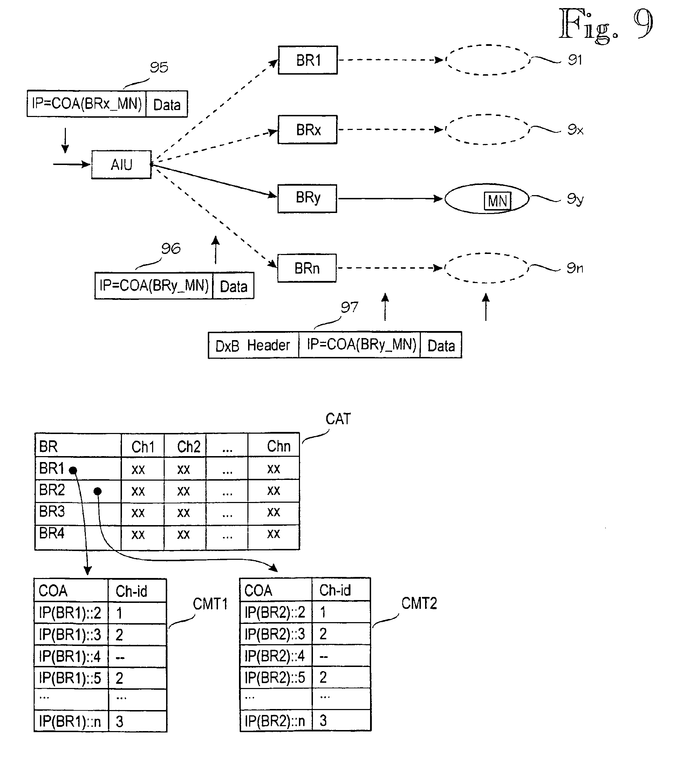

Figure 9 illustrates packet routing and the various data structures in a system as shown in Figure 8. The aggregate interface unit AIU comprises a channel allocation table CAT having a resource entry for each combination of a broadcast router BR and channel. The CAT table may indicate usage of the resources by some appropriate metric. The channel identifiers Ch1 to Chn may represent physical channels, such as several 8MHz channels in a DVB-T network. Each broadcast router BR1 to BRn comprises a channel mapping table CMT1, CMT2, etc. The channel mapping tables map the mobile node's care-of address COA to a channel identifier. Reference signs 91 to 9n denote the microcells under one AIU. x and y are two indices within the range of 1 to n. The mobile node MN in cell 9y. Reference sign 95 denotes a data packet arriving to the AIU. The data packet's header indicates the COA as COA(BRx_MN), which means the BRx subnetwork prefix plus the mobile node's MIN. The AIU's own IP address IP(AIU) is only used when the AIU needs to receive signalling packets from other units, such as the TPC, but this address is not used for routing data to the MN. The AIU uses the CAT table to convert the data packet 95 to a data packet 96 whose header indicates the COA of BRy, under which the MN is located. BRy uses its channel mapping table CMT to convert the data packet 96 to a data packet 97, which is an IP packet encapsulated in a DxB packet. In other words, the data packet 97 has a DxB header in addition to the IP header.

### Acronyms (some are not official):

ACAL: Available Care-of Address List
AIU: Aggregate Interface Unit
APL: Access Permission List
BB: Backbone Network
BG: Border Gateway
BN: Bearer Network
BR: Broadcast Router
CN: Correspondent Node
CAT/CMT: Channel Allocation/Mapping Table
COA: Care-Of Addresses
DL: Downlink
DxB: DAB or DVB
FW: Firewall
HA: Home Agent
HAN: Home Administration Node(s)
HRU: Home Register Unit
IP: Internet Protocol
IU: Interface Units
MAC: MBN Authentication Centre
MB: Mobility Binding
MBN: Multi-Bearer Network
MBN_TC: MBN Traffic Class
MHA: MBN Home Agent
MIN: MBN Interface Number
MMU: Mobility Management Unit
MN: Mobile Node
PDP: Packet Data Protocol
QMTC: QoS to MBN_TPC
QoS: Quality of Service
RMU: Resource Management Unit
SSN: Service Support Nodes
THPT: Traffic Handling Policy Table
TPC: Traffic Policy Controller
UL: Uplink

### Reference:

1. MEMO network documentation (collectively referred to as the "MEMO concept"), available at http://memo.lboro.ac.uk

## Claims

1. A method for routing data packets (DP) to a mobile node (MN) from its correspondent node (CN), via a multi-bearer network, or MBN, the multi-bearer network providing multiple different bearer types for data packet delivery, wherein the MBN comprises
at least one uplink bearer network (GSM, GPRS, UMTS),
at least one downlink bearer network (DxB), and
a backbone network (BB) comprising
an access control node set (MAC), a service support node set (SSN), an interface unit set (IU), and gateway means (BG/FW) to an IP network (IPN);
wherein the MBN further comprises or is operationally coupled to a home agent (HA, HAN),
**characterized by**
receiving and maintaining, in the service support node set (SSN), resource availability information (RR12) concerning the at least one downlink bearer network (DxB);
receiving and maintaining, in the service support node set (SSN), subscriber preference information (QMTC) concerning the mobile node;
maintaining, in the service support node set (SSN), traffic policy information (THPT) concerning the MBN;
in a centralized traffic policy controller (TPC) comprised in the service support node set (SSN), generating a routing table (ACAL) on the basis of the subscriber preference information (QMTC), the traffic policy information (THPT) and the resource availability data (RR12), and using the routing table (ACAL) for routing (SS26) one or a few initial data packets of a new session from the correspondent node (CN) to the mobile node (MN);
performing a binding update between the mobile node (MN) and the correspondent node (CN);
storing an address (202) associated with the centralized traffic policy controller (TPC) as the mobile node's care-of address in its home agent (HA);
routing (SS4, SS6) an initial data packet via the home agent and the centralized traffic policy controller to a bearer network interface unit (DL_IU) serving the mobile node;
in response to said routing, storing an address (214) of the bearer network interface unit as the mobile node's care-of address in the correspondent node (CN);
in response to said binding update, routing (SS32, SS34, SS42) subsequent data packets directly from the correspondent node (CN) to the bearer network interface unit (DL_IU), whereby said subsequent data packets bypass the home agent (HA) and the centralized traffic policy controller.

2. A method according to claim 1, **characterized in that** routing the initial data packet comprises the steps of:
determining whether the data packet's header indicates guaranteed service; and if yes:
reserving the necessary resources in the downlink bearer network (DxB).

3. A backbone network (BB) for a multi-bearer network, or MBN, to route data packets (DP) to a mobile node (MN) from its correspondent node (CN), the multi-bearer network providing multiple different bearer types for data packet delivery, wherein the MBN comprises
at least one uplink bearer network (GSM, GPRS, UMTS),
at least one downlink bearer network (DxB),
the backbone network comprising an access control node set (MAC), a service support node set (SSN), an interface unit set (IU), and
gateway means (BG/FW) to an IP network (IPN);
wherein the MBN comprises or is operationally coupled to a home agent (HA, HAN);
**characterized by**
the access control node set (MAC) being provided for centralized granting or rejecting the mobile node's (MN) rights to services via the backbone network (BB) and for storing subscriber preference information (QMTC) related to the mobile node;
the service support node set (SSN) being provided for:
- centralized administration and distribution of traffic policies (THPT);
- centralized mobility management for managing the mobility of the mobile node within each downlink bearer network (DxB);
- centralized resource control for making resource reservation decisions within each downlink bearer network (DxB); and
the interface unit set (IU) being provided for interfacing to and for carrying out the resource reservation decisions in the at least one downlink bearer network (DxB);
wherein the service support node set (SSN) comprises a mobility management unit (MMU) for centralized mobility management of the mobile node within the at least one downlink bearer network (DxB), the service support node set (SSN) being arranged to
receive subscriber preference information (QMTC) related to the mobile node;
maintain resource availability data (RR12) and make resource reservation commands (SS12) concerning said at least one downlink bearer network (DxB);
combine in a centralized traffic policy controller (TPC) traffic policy information (THPT), said subscriber preference information (QMTC) and said resource availability data (RR12) into a routing table (ACAL), and route one or a few initial data packets of a new session on the basis of said routing table; and
transmit resource reservation decisions (SS12) to at least one downlink interface unit (DxB_IU);
wherein the interface unit set (DxB_IU) is arranged to
convey an initial access request (RR2) from the mobile node (MN) to the access control node set (MAC), the access control node set controlling access to services within and via the backbone network (BB);
receive and carry out resource reservation decisions (SS12) concerning the downlink bearer network (DxB);
route data packets to the mobile node (MN) according to said mobile-node-specific traffic policies (QMTC);
wherein the interface unit set (DxB_IU) comprises a resource management unit (RMU) coupled to the interface unit (DxB_IU), for carrying out resource reservation decisions (SS12);
wherein the mobile node (MN) comprises a radio interface to multiple different bearer networks (BN), at least one bearer network being a broadcast network, the mobile node being arranged to
register with the backbone network (BB, MAC) controlling said multiple different bearer networks; and,
as a response to registration with the backbone network, update the mobile node's mobility binding via the backbone network;
wherein the MBN is arranged to
perform a binding update between the mobile node (MN) and the correspondent node (CN);
store an address associated with the centralized traffic policy controller (TPC) comprised in the service support node set (SSN) as the mobile node's care-of address in its home agent (HA); and
route an initial data packet via the home agent and the centralized traffic policy controller to a bearer network interface unit (DL_IU) serving the mobile node.

4. A backbone network (BB) according to claim 3, **characterized in that** the routing table (ACAL) is arranged to map at least one IP address to a cell/channel combination within the at least one downlink bearer network (DxB).

5. A backbone network. (BB) according to claim 3, **characterized in that** each interface unit is arranged to define an internet protocol subnetwork comprising all cells under the interface unit in question.

6. A backbone network (BB) according to claim 3 or 5, **characterized in that** the interface unit set (DxB_IU, AIU, BR) is arranged to support multiple geographically overlapping cell structures (81; 82 - 85) in a DAB and/or DVB network.

## Patentansprüche

1. Verfahren zum Routen von Datenpaketen (DP) an einen Mobilknoten (MN) von seinem Korrespondenz-Knoten (CN) über ein Mehr-Träger-Netzwerk, oder MBN, wobei das Mehr-Träger-Netzwerk mehrere verschiedene Trägerarten zur Datenpaket-Lieferung bereitstellt, wobei das MBN umfasst:
wenigstens ein Uplink-Träger-Netzwerk (GSM, GPRS, UMTS), wenigstens ein Downlink-Träger-Netzwerk (DxB), und
ein Basisnetzwerk (BB), umfassend:
ein Zugangs-Steuerknotensatz (MAC),
einen Dienst-Unterstützung-Knotensatz (SSN),
einen Schnittstelleneinheitsatz (IU), und
ein Netzübergangsmittel (BG/FW) zu einem IP-Netzwerk (IPN);
wobei das MBN weiter umfasst oder operativ verbunden ist mit einem Heimatagenten (HA, HAN),
**gekennzeichnet durch**:
Empfangen und Behalten, in dem Dienst-Unterstützung-Knotensatz (SSN), von Resource-Verfügbarkeit-Information (RR12), die das wenigstens eine Downlink-Träger-Netzwerk (DxB) betrifft;
Empfangen und Behalten, in dem Dienst-Unterstützung-Knotensatz (SSN), von Teilnehmer-Vorzug-Information (QMTC), die den Mobilknoten betrifft;
Behalten, in dem Dienst-Unterstützung-Knotensatz (SSN), von Verkehrsrichtlinien-Information (THPT), die das MBN betrifft;
Erzeugen einer Routingtabelle (ACAL) in einer zentralisierten Verkehrsrichtlinien-Steuerung (TPC), die in dem Dienst-Unterstützung-Knotensatz (SSN) enthalten ist, basierend auf der Teilnehmer-Vorzug-Information (QMTC), der Verkehrsrichtlinien-Information (THPT) und der Resource-Verfügbarkeitsdaten (RR12), und Verwenden der Routingtabelle (ACAL) zum Routen (SS26) eines oder mehrerer Anfangs-Datenpakete einer neuen Sitzung des Korrespondenz-Knotens (CN) zu dem Mobilknoten (MN);
Ausführen einer Bindungsaktualisierung zwischen dem Mobilknoten und dem Korrespondenz-Knotens (CN);
Speichern einer zur zentralisierten Verkehrsrichtlinien-Steuerung (TPC) zugehörigen Adresse als die Care-of-Adresse des Mobilknotens in seinem Heimatagenten (HA);
Routen (SS4, SS6) eines Anfangs-Datenpakets über den Heimatagenten und die zentralisierte Verkehrsrichtlinien-Steuerung an eine Träger-Netzwerk-Schnittstelleneinheit (DL_IU), die den Mobilknoten bedient;
Speichern, in Reaktion auf das Routen, einer Adresse (214) der Träger-Netzwerk-Schnittstelleneinheit als die Care-of-Adresse des Mobilknotens in dem Korrespondenz-Knoten (CN);
Routen (SS32, SS34, SS42), in Reaktion auf die Bindungsaktualisierung, nachfolgender Datenpakete direkt von dem Korrespondenzknoten (CN) zu der Träger-Netzwerk-Schnittstelleneinheit (DL_IU), womit die nachfolgenden Datenpakte den Heimatagenten (HA) und die zentralisierte Verkehrsrichtlinien-Steuerung umgehen.

2. Verfahren nach Anspruch 1, **dadurch gekennzeichnet, dass** das Routen der Anfangs-Datenpakete die Schritte umfasst:
Bestimmen, ob der Kopf der Datenpakete einen garantierten Dienst anzeigt; und wenn ja:
Reservieren der notwendigen Resourcen in dem Downlink-Träger-Netzwerk (DxB).

3. Basisnetzwerk (BB) für ein Mehr-Träger-Netzwerk, oder MBN, um Datenpakte (DP) zu einem Mobilknoten (MN) von seinem Korrespondenz-Knoten (CN) zu routen, wobei das Mehr-Träger-Netzwerk mehrere verschiedene Trägerarten zur Datenpaket-Lieferung bereitstellt, wobei das MBN umfasst:
wenigstens ein Uplink-Träger-Netzwerk (GSM, GPRS, UMTS), wenigstens ein Downlink-Träger-Netzwerk (DxB), wobei das Basisnetzwerk umfasst:
ein Zugangs-Steuerknotensatz (MAC),
einen Dienst-Unterstützung-Knotensatz (SSN),
einen Schnittstelleneinheitsatz (IU), und
ein Netzübergangsmittel (BG/FW) zu einem IP-Netzwerk (IPN);
wobei das MBN umfasst oder operativ verbunden ist mit einem Heimatagenten (HA, HAN) ;
**dadurch gekennzeichnet, dass**:
der Zugangs-Steuerknotensatz (MAC) zum zentralisierten Gewähren und Verwerfen der Rechte des Mobilknotens (MN) auf Dienste über das Basisnetzwerk (BB) bereitgestellt wird und zum Speichern von Teilnehmer-Vorzug-Information (QMTC), die den Mobilknoten betrifft;
der Dienst-Unterstützung-Knotensatz (SSN) bereitgestellt wird zur:
- zentralisierten Regelung und Verteilung von Verkehrsrichtlinien (THPT);
- zentralisierten Mobilitätsverwaltung zum Verwalten der Mobilität des Mobilknotens innerhalb jedes Downlink-Träger-Netzwerks (DxB);
- zentralisierten Resourcensteuerung zum Treffen von Resourcen-Reservierungsentscheidungen innerhalb jedes Downlink-Träger-Netzwerks (DxB) ; und
der Schnittstelleneinheitsatz (IU) bereitgestellt wird, um die Resourcen-Reservierungsentscheidungen an das bzw. in dem wenigstens einen Downlink-Träger-Netzwerk (DxB) weiterzugeben bzw. auszuführen;
wobei der Dienst-Unterstützung-Knotensatz (SSN) eine Mobilitäts-Verwaltungseinheit (MMU) zur zentralisierten Mobilitätsverwaltung des Mobilknotens aufweist innerhalb des wenigstens einen Downlink-Träger-Netzwerks (DxB), wobei der Dienst-Unterstützung-Knotensatz (SSN) eingerichtet ist:
Teilnehmer-Vorzug-Information (QMTC), die den Mobilknoten betrifft, zu empfangen;
Resource-Verfügbarkeitsdaten (RR12) zu behalten und Resource-Reservierungsbefehle (SS12) herzustellen, die das wenigstens eine Downlink-Träger-Netzwerk (DxB) betreffen;
in einer zentralisierten Verkehrsrichtlinien-Steuerung (TPC) Verkehrsrichtlinien-Information (THPT), die Teilnehmer-Vorzug-Information (QMTC) und die Resource-Verfügbarkeit-Daten (RR12) in einer Routingtabelle (ACAL) zu verbinden, und eines oder mehrere Anfangs-Datenpakete einer neuen Sitzung basierend auf der Routingtabelle zu routen; und
Resource-Reservierungsentscheidungen (SS12) an wenigstens eine Downlink-Schnittstelleneinheit (DxB_IU) zu übertragen;
wobei der Schnittstelleneinheitsatz (DxB_IU) eingerichtet ist:
eine Anfangszugangsanfrage (RR2) von dem Mobilknoten (MN) an den Zugangs-Steuerknotensatz (MAC) zu übertragen, wobei der Zugangs-Steuerknotensatz den Zugang auf Dienste innerhalb und über das Basisnetzwerk (BB) steuert;
Resource-Reservierungsentscheidungen (SS12) zu empfangen und auszuführen, die das Downlink-Träger-Netzwerk betreffen (DxB) ;
Datenpakete zu dem Mobilknoten (MN) routen, entsprechend den Mobilknoten spezifischen Verkehrsrichtlinien (QMTC);
wobei der Schnittstelleneinheitsatz (DxB_IU) eine Resourcen-Verwaltungseinheit (RMU) aufweist, die mit der Schnittstelleneinheit (DxB_IU) verbunden ist, um Resource-Reservierungsentscheidungen (SS12) auszuführen;
wobei der Mobilknoten (MN) eine Funkschnittstelle zu mehreren verschiedenen Trägernetzwerken (BN) aufweist, wobei wenigstens ein Trägernetzwerk ein Übertragungsnetzwerk ist, wobei der Mobilknoten eingerichtet ist:
sich in dem Basisnetzwerk (BB, MAC) zu registrieren, das mehrere verschiedene Trägernetzwerke steuert; und,
als eine Reaktion auf die Registrierung in dem Basisnetzwerk, die Mobilitätsbindung des Mobilknotens über das Basisnetzwerk zu aktualisieren;
wobei das MBN eingerichtet ist:
eine Bindungsaktualisierung zwischen dem Mobilknoten (MN) und dem Korrespondenzknoten (CN) auszuführen;
eine der zentralisierten Verkehrsrichtlinien-Steuerung (TPC) zugehörige Adresse zu speichern, die in dem Dienst-Unterstützungs-Knotensatz (SSN) als die Care-of Adresse des Mobilknotens in seinem Heimatagenten (HA) enthalten ist; und
ein Anfangsdatenpaket über den Heimatagenten und die zentralisierte Verkehrsrichtlinien-Steuerung zu einer Trägernetzwerk-Schnittstelleneinheit (DL_IU), die den Mobilknoten bedient, zu routen.

4. Ein Basisnetzwerk (BB) nach Anspruch 3, **dadurch gekennzeichnet, dass** die Routingtabelle (ACAL) eingerichtet ist wenigstens eine IP-Adresse auf eine Zelle/Kanal-Kombination innerhalb des wenigstens einen Downlink-Träger-Netzwerks (DxB) zu mappen.

5. Ein Basisnetzwerk (BB) nach Anspruch 3, **dadurch gekennzeichnet, dass** jede Schnittstelleneinheit eingerichtet ist, ein Internetprotokoll-Subnetzwerk, das alle Zellen unter der fraglichen Schnittstelleneinheit aufweist, zu bestimmen.

6. Ein Basisnetzwerk (BB) nach Anspruch 3 oder 5, **dadurch gekennzeichnet, dass** der Schnittstelleneinheitsatz (DxB_IU, AIU, BR) eingerichtet ist, mehrere sich geographisch überlappende Zellstrukturen (81; 82-85) in einem DAB-und/oder DVB-Netzwerk zu unterstützen.

## Revendications

1. Procédé d'acheminement de paquets de données (DP) vers un noeud mobile (MN) à partir de son noeud correspondant (CN), via un réseau support multiple, ou MBN, ce réseau support multiple fournissant de multiples types de supports différents pour l'acheminement de paquets de données, le MBN comprenant :
au moins un réseau support de liaison montante (GSM, GPRS, UMTS),
au moins un réseau support de liaison descendante (DxB), et
un réseau fédérateur (BB) comprenant
un ensemble de noeuds de contrôle d'accès (MAC),
un ensemble de noeuds de support de service (SSN),
un ensemble d'unités interfaces (IU), et
des moyens formants passerelles (BG/FW) vers un réseau IP (IPN),
dans lequel le MBN comprend en outre, ou est couplé pour fonctionner à un agent personnel (HA, HAN),
**caractérisé par**
la réception et la mise à jour, dans l'ensemble de noeuds de support de service (SSN), d'informations de disponibilité de ressources (RR12) concernant le au moins un réseau support de liaison descendante (DxB) ;
la réception et la mise à jour, dans l'ensemble de noeuds de support de service (SSN), d'informations de préférences d'abonné (QMTC) concernant le noeud mobile ;
la mise à jour, dans l'ensemble de noeuds de support de service (SSN), d'informations de politique de trafic (THPT) concernant le MBN ;
dans un contrôleur centralisé de politique de trafic (TPC) compris dans l'ensemble de noeuds de support de service (SSN), la génération d'une table d'acheminements (ACAL) en se basant sur les informations de préférences d'abonnés (QMTC), les informations de politique de trafic (THPT) et les données de disponibilité de ressources (RR12), et l'utilisation de la table d'acheminements (ACAL) pour l'acheminement (SS26) d'un ou quelques paquet(s) de données initial(ux) d'une nouvelle session depuis le noeud correspondant (CN) vers le noeud mobile (MN) ;
l'exécution d'une mise à jour de liaison entre le noeud mobile (MN) et le noeud correspondant (CN) ;
le stockage d'une adresse (202) associée au contrôleur centralisé de politique de trafic (TPC) en tant qu'adresse dédiée au noeud mobile dans son agent personnel (HA) ;
l'acheminement (SS4, SS6) d'un paquet de données initial via l'agent personnel et le contrôleur centralisé de politique de trafic vers une unité interface de réseau porteur (DL_IU) desservant le noeud mobile ;
en réponse audit acheminement, le stockage d'une adresse (214) de l'unité interface de réseau porteur en tant qu'adresse dédiée au noeud mobile dans le noeud correspondant (CN) ;
en réponse à ladite mise à jour de liaison, l'acheminement (SS32, SS34, SS42) des paquets de données suivants, directement depuis le noeud correspondant (CN) vers l'unité d'interface de réseau porteur (DL_IU), moyennant quoi les paquets de données contournent l'agent personnel (HA) et le contrôleur centralisé de politique de trafic.

2. Procédé selon la revendication 1, **caractérisé en ce que** l'acheminement du paquet de données initial comprend les étapes de :
déterminer si l'en-tête du paquet de données indique un service garanti ; et, si oui :
réserver des ressources nécessaires dans le réseau support de liaison montante (DxB).

3. Réseau fédérateur (BB) d'un réseau de support multiple, ou MBN, pour acheminer des paquets de données (DP) vers un noeud mobile (MN) depuis son noeud correspondant (CN), le réseau de support multiple constituant différents types de supports d'acheminements de paquets de données, le MBN comprenant
au moins un réseau support de liaison montante (GSM, GPRS, UMTS),
au moins un réseau support de liaison descendante (DxB),
le réseau fédérateur comprenant
un ensemble de noeuds de contrôle d'accès (MAC),
un ensemble de noeuds de support de service (SSN),
un ensemble d'unités interfaces (IU), et
des moyens formants passerelles (BG/FW) vers un réseau IP (IPN),
dans lequel le MBN comprend, ou est couplé pour fonctionner à, un agent personnel (HA, HAN),
**caractérisé par**
**le fait que** l'ensemble de noeuds de contrôle d'accès (MAC) est prévu pour l'octroi ou le rejet centralisé des droits du noeud mobile (MN) aux services, via le réseau fédérateur (BB), et pour le stockage des informations de préférences d'abonné (QMTC) associées au noeud mobile ;
l'ensemble de noeuds de support de service (SSN) étant prévu pour :
- l'administration et la distribution centralisées des politiques de trafic (THPT) ;
- la gestion centralisée de mobilité pour gérer la mobilité du noeud mobile à l'intérieur de chaque réseau de support de liaison descendante (DxB) ;
- le contrôle centralisé des ressources pour prendre des décisions de réservation de ressources à l'intérieur de chaque réseau support de liaison descendante (DxB) ; et
l'ensemble d'unités interfaces (IU) étant prévu pour être interfacé avec, et pour prendre les décisions de réservation de ressources dans le, au moins un réseau support de liaison descendante (DxB) ;
dans lequel l'ensemble de noeuds de support de service (SSN) comprend une unité de gestion de mobilité (MMU) pour la gestion centralisée de mobilité du noeud mobile dans le au moins un réseau support de liaison descendante (DxB), l'ensemble de noeuds de support de service (SSN) étant configuré pour
recevoir les informations de préférences d'abonné (QMTC) associées au noeud mobile :
mettre à jour les données de disponibilité des ressources (RR12) et exécuter des commandes de réservation de ressources (SS12)concernant au moins un réseau support de liaison descendante (DxB) ;
combiner, dans un contrôleur centralisé de politique de trafic, les informations de politique de trafic (THPT), lesdits informations de préférences d'abonné (QMTC) et lesdites données de disponibilité de ressources (RR12) dans une table d'acheminements (ACAL), et acheminer un ou quelques paquets de données initiaux d'une nouvelle session en se basant sur ladite table d'acheminements ; et
transmettre les décisions de réservation de ressources (SS12)à au moins une unité interface de liaison descendante (DxB_IU) ;
dans lequel l'ensemble d'unités interfaces (DxB_IU) est configuré pour
transférer une requête d'accès initiale (RR2) depuis le noeud mobile (MN) vers l'ensemble de noeuds de contrôle d'accès (MAC), l'ensemble de noeuds de contrôle d'accès contrôlant l'accès aux services à l'intérieur de, et via, le réseau fédérateur (BB) ;
recevoir et prendre des décisions de réservation de ressources (SS12) concernant le réseau support de liaison descendante (DxB);
acheminer des paquets de données vers le noeud mobile (MN) selon lesdites politiques de trafic spécifiques des noeuds (QMTC);
dans lequel l'ensemble d'unités interfaces (DxB_IU) comprend une unité de gestion de ressources (RMU) couplée à l'unité interface (DxB IU), pour exécuter les décisions de réservation de ressources (SS12);
dans lequel le noeud mobile (MN) comprend une interface radio vers des réseaux supports (BN) multiples différents, au moins un réseau support étant un réseau de diffusion, le noeud mobile étant configuré pour
s'inscrire auprès du réseau fédérateur (BB, MAC) contrôlant lesdits réseaux supports (BN) multiples différents ; et,
en réponse à l'inscription auprès du réseau fédérateur, mettre à jour la liaison de mobilité du noeud mobile via le réseau fédérateur ;
dans lequel le MBN est configuré pour
exécuter une mise à jour de liaison entre le noeud mobile (MN) et le noeud correspondant (CN) ;
stocker une adresse associée au contrôleur centralisé de politique de trafic (TPC) comprise dans l'ensemble de noeuds de support de service (SSN) en tant qu'adresse dédiée au noeud mobile dans son agent personnel (HA) ; et
acheminer un paquet de données initial via l'agent personnel et le contrôleur centralisé de politique de trafic vers une unité interface de réseau support (DL_IU) desservant le noeud mobile.

4. Réseau fédérateur (BB) selon la revendication 3, **caractérisé en ce que** la table d'acheminements (ACAL) est configurée pour allouer au moins une adresse IP à une combinaison de cellules/canaux à l'intérieur du au moins un réseau support de liaison descendante (DxB).

5. Réseau fédérateur (BB) selon la revendication 3, **caractérisé en ce que** chaque unité interface est configurée pour définir un sous-réseau IP comprenant toutes les cellules sous l'unité interface concernée.

6. Réseau fédérateur (BB) selon la revendication 3 ou 5, **caractérisé en ce que** l'ensemble d'unités interfaces (DxB_IU, AIU, BR) est configuré pour supporter des structures de cellules multiples se chevauchant géographiquement (81 ; 82 - 85) dans un réseau DAB et/ou DVB.
